(19) Europäisches Patentamt
European Patent Office
Office européen des brevets

(11) EP 2 648 910 B1

(12) # EUROPEAN PATENT SPECIFICATION

(45) Date of publication and mention of the grant of the patent:
**08.08.2018 Bulletin 2018/32**

(21) Application number: **11796963.4**

(22) Date of filing: **08.12.2011**

(51) Int Cl.:
***B65D 81/28*** (2006.01) ***B32B 27/08*** (2006.01)
***B32B 27/32*** (2006.01) ***C08L 23/14*** (2006.01)

(86) International application number:
**PCT/EP2011/072144**

(87) International publication number:
**WO 2012/076633 (14.06.2012 Gazette 2012/24)**

(54) **PERMEABLE POLYMER FILM**

DURCHLÄSSIGER POLYMERFILM

FILM POLYMERIQUE PERMEABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2010 EP 10194354**
**10.12.2010 US 421839 P**

(43) Date of publication of application:
**16.10.2013 Bulletin 2013/42**

(73) Proprietor: **Basell Poliolefine Italia S.r.l.**
**20121 Milano (IT)**

(72) Inventors:
- **GRAZZI, Michele**
**I-44040 Casaglia (FE) (IT)**
- **FELISATI, Andrea**
**I-44122 Ferrara (IT)**
- **PELLEGATTI, Giampaolo**
**I-44030 Boara (FE) (IT)**

(74) Representative: **Gaverini, Gaetano Luigi Attilio et al**
**Basell Poliolefine Italia S.r.l.**
**Intellectual Property**
**P.le Donegani, 12**
**44122 Ferrara (IT)**

(56) References cited:
**WO-A1-2010/069668**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 648 910 B1

## Description

The present invention relates to a polymer film especially suitable for the packaging of fresh foodstuff, like salad and vegetables.

It is well known that polypropylene films, and particularly biaxially oriented polypropylene films (BOPP), are widely used for the packaging of foodstuff using automatic machines. In fact the said films are characterized by a particular good balance of processability ("machinability"), optical and mechanical properties, and low permeability to gases, in particular oxygen and carbon dioxide, and water vapour.

However for the packaging of fresh foods, in particular vegetables, greater gas transmission rates are necessary. As a matter of fact, the metabolic activity of vegetable cells continues also after these foods are harvested, cleaned and cut into pieces; therefore the cells still "breathe", consuming the oxygen and emitting carbon dioxide and water vapour. In a closed package this process quickly results in changes of the atmosphere inside the package, making it unsuitable for the continuation of the metabolic activity and favourable for the development of undesired micro-organisms.

Monolayer and multilayer films suitable for packaging fresh produce items that continue to respire after they are harvested are described in US6348271. The films therein described are characterized by the presence of at least one layer of a propylene resin composition comprising a propylene polymer component and up to 70% by weight of an ethylene/propylene copolymer. Additional layers made of propylene polymers can be present.

In such document it is explained that, to avoid excessive drying of the packaged foodstuff, the water vapour transmission rate should not be greater than 50 $g/m^2$*day. On the other hand, a high oxygen transmission rate would be desirable, but an increase of oxygen transmission rate can easily raise the water vapour transmission rate to excessively high values. In particular, in the examples of US6348271 it is shown that at an oxygen transmission rate value of around 6000 $nmol/m^2$*s*100kPa, corresponding to around 3000 $cm^3$ (STP)/$m^2$*day, measured at 1 atmosphere pressure difference, the vapour transmission rate becomes as high as 60 $g/m^2$*day.

It has now been found that a particularly good balance of oxygen and water vapour transmission rate is achieved by combining at least one film layer comprising a specific propylene copolymer with another layer comprising a polyolefin composition containing a propylene polymer and a propylene/ethylene copolymer with high solubility in hydrocarbon solvents.

Due to its valuable properties, the said propylene copolymer provides valuable film performances, in particular a valuable balance of resistance to solvents (low amounts of fraction soluble in organic solvents, in particular hydrocarbons), ink and dye printability and heat sealability, as it makes it possible to seal the film at advantageously low temperatures. WO 2010/069668 A1 discloses a multilayer film (claim 1) in which at least one layer (A) comprises a copolymer (A1) of propylene with hexene-1 containing from 4 to 10% by weight of hexene-1, with a melting point in the range 125 to 145°C; and at least one layer (B) comprises a copolymer (B1) of ethylene with one or more CH2=CHR $\alpha$-olefins, where R is a C1-C10 alkyl radical, the said copolymer containing up to 20 mol % of CH2=CHR $\alpha$-olefins. One embodiment describes that the polymer material of layer (B) can be made up essentially of a polymer composition comprising from 80 to 100 parts by weight of the said copolymer of ethylene (B1) and from 5 to 30 parts by weight of a copolymer (B2) of propylene with ethylene and/or one or more CH2=CHR $\alpha$-olefins, whereby said copolymer (B2) contains from 60 to 98% by weight of units derived from propylene, and has a xylene-insoluble fraction greater than 70%. The copolymer (B2) preferably contains from 70 to 95% by weight of units derived from propylene and has a xylene- insoluble fraction greater than 80% at room temperature. Said film may be used in food packaging. Thus the present invention provides a multilayer film comprising at least one layer A) and at least one layer B), wherein the layer A) comprises a copolymer (i) of propylene with hexene-1 containing from 3 to 9% by weight, preferably from 5 to 9% by weight, more preferably from 6 to 9% by weight, in particular from 6.5 to 9% by weight, of recurring units derived from hexene-1, said copolymer having a melting temperature from 125°C to 143°C, preferably from 128°C to 143°C, and the layer B) comprises a polyolefin composition (ii) containing (all percentages being by weight):

a) 10-40%, preferably 20-40%, more preferably 25-38%, of one or more propylene polymers selected from propylene homopolymers copolymers of propylene with ethylene or a $CH_2$=CHR $\alpha$-olefin, where R is a $C_2$-$C_8$ alkyl radical, and copolymers of propylene with ethylene and said $CH_2$=CHR $\alpha$-olefin, said copolymers containing over 85% of propylene and having a fraction insoluble in xylene at room temperature greater than 80%; and

b) 60-90%, preferably 60-80%, more preferably 62-75%, of one or more copolymers of ethylene with propylene or a $CH_2$=CHR $\alpha$-olefin, where R is a $C_2$-$C_8$ alkyl radical, or a combination thereof, and optionally minor quantities of a diene, said copolymers containing ethylene in a quantity from 20 to 40%, preferably from 20 to 38%, and having solubility in xylene at room temperature greater than 70%, preferably greater than 80%;

the amounts of (a) and (b) being referred to the total weight of (a) and (b).

For room temperature, a temperature of 25°C is meant.

In particular, the films of the present invention can have a A)/B) or a A)/B)/A) structure, wherein layers A) and

B) are as above defined.

From the above definitions it is clear that the term "copolymer" includes polymers containing more than one kind of comonomers, such as terpolymers.

The said amounts of hexene-1 units are referred to the total weight of the copolymer (i).

The said melting temperature values for the copolymer (i) are determined by differential scanning calorimetry, according to ISO 11357-3, with a heating rate of 20 °C/minute.

copolymer (i), provided that the final properties of the copolymer are not substantially worsened. Examples of the said $CH_2=CHR^I$ $\alpha$-olefins are butene-1, 4-methyl-1-pentene, octene-1. Among the said other comonomers, ethylene is preferred.

Indicatively, the total amount of recurring units derived from comonomer(s) different from propylene and hexene-1 in copolymer (i) is from 0.5 to 2% by weight, preferably from 0.5 to 1.5% by weight, referred to the total weight of the copolymer.

Moreover, the copolymer (i) is semicrystalline, as it has a crystalline melting point, and typically has a stereoregularity of isotactic type.

Preferably, said copolymer (i) exhibits at least one of the following features:

- a solubility in xylene at room temperature equal to or lower than 25% by weight, preferably equal to or lower than 20 % by weight;
- Isotacticity Index equal to or higher than 97%, determined as mm triads using $^{13}C$-NMR;
- a molecular weight distribution expressed by the $\overline{M}w/\overline{M}n$ ratio, measured by GPC, (Gel Permeation Chromathograpy), from 4 to 7.

In particular, the copolymer (i) has preferably a Melt Flow Rate (MFR, measured according to ISO 1133, 230°C/2.16 kg, i.e. at 230°C, with a load of 2.16 kg) from 0.1 to 10 g/10 min., more preferably from 0.1 to 5 g/10 min., in particular from 0.1 to 3 g/10 min.

Such copolymer (i) can be obtained with polymerization processes carried out in the presence of stereospecific Ziegler-Natta catalysts supported on magnesium dihalides. By properly dosing the molecular weight regulator (preferably hydrogen), the said preferred Melt Flow Rate values and melting temperature values are obtained, when the amount of recurring units derived from hexene-1 is within the above said range of from 3 to 9% by weight, preferably from 5 to 9% by weight.

The polymerization process, which can be continuous or batch, is carried out following known techniques and operating in liquid phase, in the presence or not of inert diluent, or in gas phase, or by mixed liquid-gas techniques. It is preferable to carry out the polymerization in gas phase.

Polymerization reaction time, pressure and temperature are not critical, however it is best if the temperature is from 20 to 100°C. The pressure can be atmospheric or higher.

As previously mentioned, the regulation of the molecular weight is carried out by using known regulators, hydrogen in particular.

The said stereospecific Ziegler-Natta polymerization catalysts comprise the product of the reaction between:

1) a solid component, containing a titanium compound and an electron-donor compound (internal donor) supported on magnesium dihalide (preferably chloride);
2) an aluminum alkyl compound (cocatalyst); and, optionally,
3) an electron-donor compound (external donor).

Said catalysts are preferably capable of producing homopolymers of propylene having an isotactic index higher than 90% (measured as weight amount of the fraction insoluble in xylene at room temperature).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters and succinic acid esters.

Suitable succinic acid esters are represented by the formula (I):

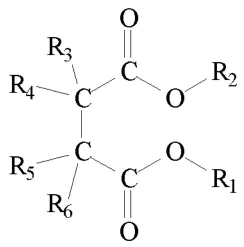

(I)

wherein the radicals $R_1$ and $R_2$, equal to or different from each other, are a C1-C20 linear or branched alkyl, alkenyl, cycloalkyl, aryl, arylalkyl or alkylaryl group, optionally containing heteroatoms; the radicals $R_3$ to $R_6$ equal to or different from each other, are hydrogen or a C1-C20 linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably C1-C8 alkyl, cycloalkyl, aryl, arylalkyl and alkylaryl groups.

Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from C1-C20 linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom.

Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical). Examples of the said silicon compounds are those of formula $R_a^1R_b^2Si(OR^3)_c$, where a and b are integer numbers from 0 to 2, c is an integer from 1 to 3 and the sum (a+b+c) is 4; $R^1$, $R^2$, and $R^3$ are alkyl, cycloalkyl or aryl radicals with 1-18 carbon atoms optionally containing heteroatoms.

Thexyltrimethoxysilane (2,3-dimethyl-2-trimethoxysilyl-butane) is particularly preferred.

Other preferred silicon compounds are diisopropyl dimethoxy silane and dicyclopentyl dimethoxysilane.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

Examples of the said $CH_2$=CHR $\alpha$-olefins where R is a $C_2$-$C_8$ alkyl radical, present in the composition (ii), are butene-1, pentene-1, 4-methyl-pentene-1, hexene-1, and octene-1. Butene-1 is preferred.

Whenever present, the amount of diene in component (b) of the composition (ii) is preferably from 1 to 10% by weight with respect to the total weight of component (b). Examples of dienes are butadiene, 1,4-hexadiene, 1,5-hexadiene, and ethylidene-1-norbornene.

Preferably the intrinsic viscosity of the fraction soluble in xylene at room temperature of the composition (ii) is from 2 to 4 dl/g.

Examples of composition (ii) are described in published European patent application EP-A-0472946 and in WO03/011962. The polyolefin composition (ii) can be prepared by mixing the previously prepared components (a) and (b) in the fluid state, i.e., at temperatures greater than their softening or melting point, or, more preferably, by sequential polymerization in two or more stages. It is preferred to carry out the polymerization processes for the preparation of the single components or of the polyolefin composition (ii) (sequential polymerization) in the presence of a highly stereospecific Ziegler-Natta catalyst. In particular, the Ziegler-Natta catalysts described in detail in connection with the preparation

of the copolymer (i) of propylene with hexene-1 of layer A) can be used for the preparation of the polyolefin composition (ii) as well.

Whenever desirable for balancing the mechanical and gas transmission properties of the film of the present invention, the film layer B) can comprise a blend of the polyolefin composition (ii) with a copolymer of propylene with hexene-1 falling within the definition of the copolymer (i).

Preferred relative amounts are from 30% to 70% by weight of polyolefin composition (ii) and from 30% to 70% by weight of the said copolymer (i). Such amounts are referred to the total weight of the polyolefin composition (ii) and of the copolymer (i).

All the film layers may also contain the additives that are commonly used for the film manufacturing, and especially for the films used for packaging applications with automatic machines, such as anti-oxidants, process stabilizers, slip agents, antistatic agents, antiblock agents.

Independently from the structure of the film, the overall film thickness is preferably from 9 to 100 microns, the thickness of the layer(s) A) is preferably from 0.5 to 15 microns, and that of the layer(s) B), typically used as inner layer(s), is from 9.5 to 99.5 microns.

The said films are produced by using processes well known in the art.

In particular, extrusion processes can be used.

In said extrusion processes the polymer materials to be used for the various layers are molten in different extruders and extruded through a narrow die slit. Subsequent from the exit from the die, the material can be cooled, heated and optionally oriented in several ways or in combination. Examples of such processes are cast, blown, extrusion coating, uniaxially oriented, simultaneous biaxially oriented, and sequential biaxially oriented film processes.

Specific examples of such processes are the blown film and BOPP processes hereinbelow explained.

<u>Blown Film</u>

The molten polymer materials are forced through a circular shaped die.

The extrudate which is drawn off has the shape of a tube, which is inflated by air to form a tubular bubble. The bubble is cooled and collapsed before winding-up.

The blown film process is preferred for the preparation of the film of the present invention.

<u>BOPP</u>

The molten polymer materials are forced continuously through a narrow die. The extruded molten material is pulled away from the die and cooled, then heated again and stretched both in the Machine Direction (MD) and in the Transverse Direction (TD). After the stretching process, the film is cooled and then wound-up.

The following examples are given to illustrate, not to limit, the present invention.

The following analytical methods have been used to determine the properties reported in the present application.

<u>Hexene-1 content and isotacticity</u>

Determined by $^{13}$C-NMR spectroscopy.

$^{13}$C-NMR spectra are acquired on a *Bruker DPX-600* spectrometer operating at 150.91 MHz in the Fourier transform mode at 120 °C.

The samples are dissolved in 1,1,2,2-tetrachloroethane-*d2* at 120 °C with a 8% wt/v concentration. Each spectrum is acquired with a 90° pulse, 15 seconds of delay between pulses and CPD (WALTZ 16) to remove $^{1}$H-$^{13}$C coupling. About 1500 transients are stored in 32K data points using a spectral window of 6000 Hz.

The peak of the Propylene CH is used as internal reference at 28.83 ppm.

The evaluation of diad distribution and the composition is obtained from Sαα using the following equations:

$$PP = 100\ S\alpha\alpha\ (PP)/\Sigma$$

$$PH = 100\ S\alpha\alpha\ (PH)/\Sigma$$

$$HH = 100\ S\alpha\alpha\ (HH)/\Sigma$$

Where $\Sigma = \sum S\alpha\alpha$

$$[P] = PP+0.5PH$$

$$[H] = HH +0.5PH$$

Ethylene content

Via InfraRed analysis.

The spectrum of a pressed film of the polymer is recorded in absorbance vs. wavenumbers ($cm^{-1}$). The following measurements are used to calculate the ethylene content:

a) **Area ($A_t$)** of the combination absorption bands between 4482 and 3950 $cm^{-1}$ which is used for spectrometric normalization of film thickness.
b) **Area ($A_{C2}$)** of the absorption band due to methylenic sequences ($CH_2$ rocking vibration) after a proper digital subtraction of an isotactic polypropylene (IPP) reference spectrum. The range 660 to 790 $cm^{-1}$ is used for both heterophasic and/or random copolymers.

Melt Flow Rate (MFR, 230 °C, 2.16 kg)

ISO 1133, 230°C/2.16 kg.

Intrinsic viscosity

Measured in tetrahydronaphthalene at 135° C

Determination of Solubility in Xylene at room temperature (% by weight)

2.5 g of polymer are dissolved in 250 ml of xylene, at 135°C, under agitation. After 20 minutes, the solution is cooled to 25°C under stirring, and then it is allowed to settle for 30 minutes. The precipitate is filtered with filter paper; the solution is evaporated under a nitrogen current, and the residue dried under vacuum at 80°C until constant weight. The weight percentage of polymer soluble in xylene at room temperature is then calculated. The percent by weight of polymer insoluble in xylene at room temperature is considered the isotactic index of the polymer. This value corresponds substantially to the isotactic index determined by extraction with boiling n-heptane, which by definition constitutes the isotactic index of polypropylene.

Propylene copolymers: determination of melting temperature

The melting temperature is determined using the following procedure according to ISO 11357 Part 3.
Differential scanning calorimetric (DSC) data is obtained using a DSC Q1000 TA Instruments. Samples weighing approximately 6-8 mg are sealed in aluminum sample pans.
The samples are subjected to a first heating run from 5 °C to 200 °C with a heating rate of 20 °C/minute, and kept at 200 °C under isothermal conditions for 5 minutes. Then the samples are cooled from 200 °C to 5 °C with a cooling rate of 20 °C/minute, and kept at 5 °C under isothermal conditions for 5 minutes, after which they are subjected to a second heating run from 5 °C to 200 °C with a heating rate of 20 °C/minute. The melting temperature is the temperature of the highest melting peak obtained in the second heating run.

MWD and $\overline{M}_w/\overline{M}_n$ determination by Gel Permeation Chromatography (GPC)

MWD and particularly the ratio $\overline{M}_w/\overline{M}_n$ is determined using a Waters 150-C ALC/GPC system equipped with a TSK column set (type GMHXL-HT) working at 135°C with 1,2-dichlorobenzene as solvent (ODCB) (stabilized with 0.1 vol. of 2, 6-di-t-butyl p-cresole (BHT)) at flow rate of 1 ml/min. The sample is dissolved in ODCB by stirring continuously at a temperature of 140°C for 1 hour.
The solution is filtered through a 0.45 $\mu$m Teflon membrane. The filtrate (concentration 0.08-1.2g/l injection volume 300 $\mu$l) is subjected to GPC. Monodisperse fractions of polystyrene (provided by Polymer Laboratories) are used as standard. The universal calibration for butene-1 polymers is performed by using a linear combination of the Mark-

Houwink constants for PS (K=7.11x10-5dl/g; a=0.743) and PB(K=1.18x10-4dl/g; $\alpha$=0.725).

MEASUREMENTS ON FILMS

Oxygen transmission (OTR)

Measured on a Mocon OX-TRAN 2/21 unit, commercially available from Mocon, Inc., according to ASTM D3985 at 23°C, 0% relative humidity (RH), and 100% $O_2$.

Water vapor transmission (WVTR)

Measured on a Mocon PERMATRAN W3/33 unit, commercially available from Mocon, Inc. according to ASTM F1249 at 37.8°C and 90% relative humidity (RH).

Puncture resistance and deformation

Determined from the energy required to puncture the film with a plunger (50 mm, diameter of 4 mm) with a rate of 20 mm/min, followed by measuring the deformation.

Tensile Modulus

Determined according to ASTM D882, both in the machine direction (MD) and in the transverse direction (TD).

PRODUCTS USED IN THE WORKING EXAMPLES

Three layer films are prepared using the hereinafter described polymer materials.

Layers A)

Preparation of the copolymers (i)

Two copolymers of propylene with hexene-1, hereinafter called Copolymer 1 and Copolymer 2, are prepared as follows.

The solid catalyst component used in polymerization is a highly stereospecific Ziegler-Natta catalyst component supported on magnesium chloride, containing about 2.2% by weight of titanium and diisobutylphthalate as internal donor, prepared by analogy with the method described in WO03/054035 for the preparation of catalyst component A .

Catalyst system and prepolymerization treatment

Before introducing it into the polymerization reactor, the solid catalyst component described above is contacted at 15 °C for about 6 minutes with aluminum triethyl (TEAL) and thexyltrimethoxysilane (2,3-dimethyl-2-trimethoxysilyl-butane), in a TEAL/ thexyltrimethoxysilane weight ratio equal to about 7 and in such quantity that the TEAL/solid catalyst component weight ratio be equal to about 6.

The catalyst system is then subjected to prepolymerization by maintaining it in suspension in liquid propylene at 20 °C for about 20 minutes before introducing it into the polymerization reactor.

Polymerization

The polymerization is carried out in a gas phase polymerization reactor by feeding in a continuous and constant flow the prepolymerized catalyst system, hydrogen (used as molecular weight regulator), propylene and hexene-1 in the gas state.

The main polymerization conditions are:

| | **Copolymer 1** | **Copolymer 2** |
|---|---|---|
| Temperature: | 75°C | 75°C |
| Pressure: | 16 MPa | 16 MPa |
| molar ratio $H_2$/C3-: | 0.001 | 0.001 |

(continued)

| | Copolymer 1 | Copolymer 2 |
|---|---|---|
| molar ratio C6-/(C6- + C3-): | 0.012 | 0.022 |
| residence time: | 64 minutes | 74 minutes |
| Note: C3- = propylene; C6- = hexene-1. | | |

The polymer particles exiting the reactor are subjected to a steam treatment to remove the reactive monomers and volatile substances, and then dried.
The resulting copolymers have the following properties:

| | Copolymer 1 | Copolymer 2 |
|---|---|---|
| Hexene-1 content | 4.3% by weight | 8.1% by weight |
| MFR: | 0.6 g/10 min. | 0.5 g/10 min. |

Amount of fraction soluble in xylene

| | | |
|---|---|---|
| at room temperature: | 3.4% by weight | 23.2% by weight |
| Melting temperature: | 139.7°C | 132.4°C |

Layer B)

The material used to prepare the layer B) is a polyolefin composition (ii) having a MFR of 0.6 g/10 min. and comprising (weight percentages):

A) 32% of a crystalline propylene random copolymer containing 3.5% of ethylene and about 6% of a fraction soluble in xylene at room temperature, and having an intrinsic viscosity [η] of 1.5 dl/g;
B) 68% of an ethylene/propylene copolymer containing 27% of ethylene, having solubility in xylene at room temperature of 89% by weight.

The intrinsic viscosity of the fraction soluble in xylene at room temperature of the total composition is of 3.2 dl/g.
Such composition has been prepared by a sequential polymerization process in the presence of a stereospecific Ziegler-Natta catalyst supported on magnesium dichloride.

EXAMPLES 1 AND 2

Preparation of the films

Before using them to prepare films, the said two copolymers of propylene with hexene-1 are both extruded with 500 ppm by weight of Dynamar FX5911 and 750 ppm by weight of NA 21, thus obtaining the final products COPO-1, resulting from extrusion with the said additives of Copolymer 1, and COPO-2, resulting from extrusion with the said additives of Copolymer 2.
Dynamar™ FX5911 is a fluoropolymer sold by 3M for use as processing aid.
NA 21™ is a nucleating agent based on aluminium-hydroxy-bis[2,2'-methylene-bis(4,6-di-t-butylphenyl)phosphate], sold by Asahi Denka K. K.
The said extrusions with Dynamar FX5911 and NA 21 are carried out in a co-rotating twin screw three lobs profile extruder (ZSK58 type, length/diameter ratio of 28, manufactured by Coperion) under nitrogen atmosphere in the following conditions:

| | |
|---|---|
| Rotation speed: | 260 rpm; |
| Extruder output: | 160 kg/hour; |
| Melt temperature: | 250-260 °C. |

The three layer films are prepared on a Kiefel three layer coextrusion line.
The final film thickness of the films is approximately 30 micron, with a structure A/B/A wherein the thickness of

each layer A) amounts to 30% of the total thickness and the thickness of layer B) to the remaining 40%.

The film of Example 1 is prepared by using COPO-1 for both the two layers A) and the above described polyolefin composition (ii) for layer B). The film of Example 2 is prepared by using COPO-2 for both the two layers A) and the above described polyolefin composition (ii) for layer B).

In the said Kiefel coextrusion blown-film line, the screw length / screw diameter ratios are 60 mm /24 xD for all three A, B and C extruders. No IBCS system (Internal Bubble Cooling System) is used. During the extrusion trials, the melt is extruded through an annular die with a diameter of 200 mm and a quite narrow gap (1.2 mm for the trials). At the exit from the die, the melt tube is subjected to intensive air cooling, immediately blown up to about three times the diameter of the die and stretched in the direction of the flow.

The main operating conditions in Examples 1 and 2 are:

- Barrel temperature: 230-230-230-230°C;
- Adaptor temperature: 235-235-240-240°C;
- Die temperature: 240°C;
- Screw speed: 90 rpm for Extruder B (B layer), 53 rpm for both A&C extruders (A & C side layers);
- Blow-up ratio: 3.1;
- Total line throughput: 125-132 kg/h.

The properties of the so obtained films are reported in Table 1.

Table 1

| Example No. | 1 | 2 |
|---|---|---|
| OTR [$cm^3/m^2$*day] | 6021 | 7803 |
| WVTR [$g/m^2$*day] | 15.4 | 21.3 |
| Puncture resistance [N] | 7.9 | 8 |
| Puncture deformation [mm] | 11.1 | 11.5 |
| Tensile Modulus (MD) [MPa] | 291 | 173 |
| Tensile Modulus (TD) [MPa] | 316 | 133 |

## Claims

1. A film comprising at least one layer A) and at least one layer B), wherein the layer A) comprises a copolymer (i) of propylene with hexene-1 containing from 3 to 9% by weight, preferably from 5 to 9% by weight, more preferably from 6 to 9% by weight, in particular from 6.5 to 9% by weight, of recurring units derived from hexene-1, said copolymer having a melting temperature from 125°C to 143°C, preferably from 128°C to 143°C as determined by differential scanning calorimetry according to ISO 11357-3, with a heating rate of 20°C/min, and the layer B) comprises a polyolefin composition (ii) containing (all percentages being by weight):

   a) 10-40%, preferably 20-40%, more preferably 25-38%, of one or more propylene polymers selected from propylene homopolymers, copolymers of propylene with ethylene or a $CH_2$=CHR $\alpha$-olefin, where R is a $C_2$-$C_8$ alkyl radical, and copolymers of propylene with ethylene and said $CH_2$=CHR $\alpha$-olefin, said copolymers containing over 85% of propylene and having a fraction insoluble in xylene at room temperature greater than 80%; and
   b) 60-90%, preferably 60-80%, more preferably 62-75%, of one or more copolymers of ethylene with propylene or a $CH_2$=CHR $\alpha$-olefin, where R is a $C_2$-$C_8$ alkyl radical, or a combination thereof, and optionally minor quantities of a diene ranging from 1 to 10% by weight, said copolymers containing ethylene in a quantity from 20 to 40%, preferably from 20 to 38%, and having solubility in xylene at room temperature greater than 70%, preferably greater than 80%;

   the amounts of (a) and (b) being referred to the total weight of (a) and (b).

2. The film of claim1, having a A)/B) or A)/B)/A) structure, where A) and B) are the layers as defined in claim 1.

3. The film of the preceding claims, having an overall thickness from 9 to 100 microns.

4. The film of the preceding claims, prepared by using a blown film process.

5. The film of the preceding claims, wherein the copolymer (i) has a Melt Flow Rate (MFR, measured according to ISO 1133, 230°C/2.16 kg) from 0.1 to 10 g/10 min., more preferably from 0.1 to 5 g/10 min., in particular from 0.1 to 3 g/10 min.

6. The film of the preceding claims, wherein the intrinsic viscosity of the fraction soluble in xylene at room temperature of the composition (ii) is from 2 to 4 dl/g, as measured in tetrahydronaphthalene at 135°C.

7. Food packaging items comprising the film of the preceding claims.

## Patentansprüche

1. Folie, umfassend mindestens eine Schicht A) und mindestens eine Schicht B), wobei die Schicht A) ein Copolymer (i) von Propylen mit Hexen-1 umfasst, das 3 bis 9 Gew.%, vorzugsweise 5 bis 9 Gew.%, bevorzugter 6 bis 9 Gew.%, insbesondere 6,5 bis 9 Gew.% sich wiederholende Einheiten enthält, die von Hexen-1 abgeleitet sind, wobei das Copolymer eine Schmelztemperatur von 125 °C bis 143 °C, vorzugsweise von 128 °C bis 143 °C aufweist, bestimmt mittels Differentialscanningkalorimetrie gemäß ISO 11357-3 mit einer Heizrate von 20 °C/min, und die Schicht B) eine Polyolefinzusammensetzung (ii) umfasst, welches folgendes enthält (alle Prozentsätze beziehen sich auf das Gewicht):

   a) 10-40 %, vorzugsweise 20-40 %, bevorzugter 25-38 % von einem oder mehreren Propylenpolymeren ausgewählt aus Propylenhomopolymeren, Copolymeren von Propylen mit Ethylen oder einem $CH_2$=CHR $\alpha$-Olefin, wobei R ein $C_2$-$C_8$-Alkylrest ist, und Copolymeren von Propylen mit Ethylen und dem $CH_2$=CHR $\alpha$-Olefin, wobei die Copolymere mehr als 85 % Propylen enthalten und eine in Xylol bei Raumtemperatur unlösliche Fraktion von mehr als 80 % aufweisen; und
   b) 60-90 %, vorzugsweise 60-80 %, bevorzugter 62-75 % von einem oder mehreren Copolymeren von Ethylen mit Propylen oder einem $CH_2$=CHR $\alpha$-Olefin, wobei R ein $C_2$-$C_8$-Alkylrest ist, oder einer Kombination davon, und gegebenenfalls geringen Mengen eines Diens im Bereich von 1 bis 10 Gew.%, wobei die Copolymere Ethylen in einer Menge von 20 bis 40 %, vorzugsweise von 20 bis 38 % enthalten und Löslichkeit in Xylol bei Raumtemperatur von mehr als 70 %, vorzugsweise mehr als 80 % aufweisen; wobei sich die Mengen von (a) und (b) auf das Gesamtgewicht von (a) und (b) beziehen.

2. Folie nach Anspruch 1, mit einer A)/B)- oder A)/B)/A)-Struktur, wobei A) und B) die Schichten wie in Anspruch 1 definiert sind.

3. Folie nach einem der vorhergehenden Ansprüche mit einer Gesamtdicke von 9 bis 100 Mikrometern.

4. Folie nach den vorhergehenden Ansprüchen, die unter Verwendung eines Blasfolienprozesses hergestellt ist.

5. Folie nach den vorhergehenden Ansprüchen, wobei das Copolymer (i) eine Schmelzflussrate (MFR, gemessen gemäß ISO 1133, 230 °C/2,16 kg) von 0,1 bis 10 g/10 min., bevorzugter von 0,1 bis 5 g/10 min., insbesondere von 0,1 bis 3 g/10 min. aufweist.

6. Folie nach den vorhergehenden Ansprüchen, wobei die Grenzviskosität der in Xylol bei Raumtemperatur löslichen Fraktion der Zusammensetzung (ii) 2 bis 4 dl/g beträgt, gemessen in Tetrahydronaphthalin bei 135 °C.

7. Nahrungsmittelverpackungsartikel, die die Folie der vorhergehenden Ansprüche umfassen.

## Revendications

1. Film comprenant au moins une couche A) et au moins une couche B), dans lequel la couche A) comprend un copolymère (i) de propylène avec du hexène-1 contenant de 3 à 9 % en poids, de préférence de 5 à 9 % en poids, de manière davantage préférée de 6 à 9 % en poids, en particulier de 6,5 à 9 % en poids, d'unités récurrentes dérivées de hexène-1, ledit copolymère ayant une température de fusion de 125 °C à 143 °C, de préférence de 128 °C à 143 °C, telle que déterminée par calorimétrie différentielle à balayage selon ISO 11357-3, avec une vitesse

de chauffage de 20 °C/min, et la couche B) comprend une composition de polyoléfine (ii) contenant (tous les pourcentages étant en poids) :

a) 10 à 40 %, de préférence 20 à 40 %, de manière davantage préférée 25 à 38 %, d'un ou de plusieurs polymères de propylène choisis parmi des homopolymères de propylène, des copolymères de propylène avec de l'éthylène ou une $\alpha$-oléfine $CH_2$=CHR, où R est un radical alkyle en $C_2$-$C_8$, et des copolymères de propylène avec de l'éthylène et ladite $\alpha$-oléfine $CH_2$=CHR, lesdits copolymères contenant plus de 85 % de propylène et ayant une fraction insoluble dans le xylène à température ambiante supérieure à 80 % ; et
b) 60 à 90 %, de préférence 60 à 80 %, de manière davantage préférée 62 à 75 %, d'un ou de plusieurs copolymères d'éthylène avec du propylène ou une $\alpha$-oléfine $CH_2$=CHR, où R est un radical alkyle en $C_2$-$C_8$, ou une combinaison de ceux-ci, et éventuellement des quantités mineures d'un diène allant de 1 à 10 % en poids, lesdits copolymères contenant de l'éthylène dans une quantité de 20 à 40 %, de préférence de 20 à 38 %, et ayant une solubilité dans le xylène à température ambiante supérieure à 70 %, de préférence supérieure à 80 % ;

les quantités de (a) et (b) se référant au poids total de (a) et (b).

**2.** Film selon la revendication 1, ayant une structure A)/B) ou A)/B)/A), où A) et B) sont les couches telles que définies dans la revendication 1.

**3.** Film selon les revendications précédentes, ayant une épaisseur globale de 9 à 100 microns.

**4.** Film selon les revendications précédentes, préparé en utilisant un procédé de film soufflé.

**5.** Film selon les revendications précédentes, dans lequel le copolymère (i) a un indice de fluidité à chaud (MFR, mesuré selon ISO 1133, 230 °C/2,16 kg) de 0,1 à 10 g/10 min, de manière davantage préférée de 0,1 à 5 g/10 min, en particulier de 0,1 à 3 g/10 min.

**6.** Film selon les revendications précédentes, dans lequel la viscosité intrinsèque de la fraction soluble dans le xylène à température ambiante de la composition (ii) est de 2 à 4 dl/g, telle que mesurée dans du tétrahydronaphtalène à 135 °C.

**7.** Articles d'emballage alimentaire comprenant le film des revendications précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6348271 B
- WO 2010069668 A1
- US 4399054 A
- EP 45977 A
- EP 361493 A
- EP 728769 A
- EP 0472946 A
- WO 03011962 A
- WO 03054035 A